# EUROPÄISCHE PATENTSCHRIFT

(11) **EP 1 610 027 B1**
(45) Veröffentlichungstag und Bekanntmachung des Hinweises auf die Patenterteilung: **18.02.2009**
(21) Anmeldenummer: 05105355.1
(22) Anmeldetag: 17.06.2005
(51) Int. Cl.: F16D 65/847, F16D 65/78, F16D 55/00

(54) **SCHEIBENBREMSE MIT KÜHLUNGSVORRICHTUNG**
Cooling device for a disc brake.
Dispositif de refroidissement pour frein à disque.

(30) Priorität: 21.06.2004 DE 102004029771
(43) Veröffentlichungstag der Anmeldung: 28.12.2005
(73) Patentinhaber: Continental Teves AG & Co. oHG, 60488 Frankfurt am Main (DE)
(72) Erfinder: HALASY-WIMMER, Georg, 71706, Markgröningen (DE); SCHMITT, Stefan, 65343, Eltville (DE); SCHACK, Peter, 63500, Seligenstadt (DE); POHLMANN, Andreas, 65760, Eschborn (DE)

(56) Entgegenhaltungen:
- EP-A- 1 016 804
- DE-A1- 3 833 552
- US-A- 5 558 183

## Beschreibung

Die Erfindung betrifft eine Scheibenbremse, insbesondere eine Reibungsbremse für Kraftfahrzeuge, mit einer Vorrichtung zur Bremsenkühlung.

Bekannte Scheibenbremsen, vor allem innerhalb von Kraftfahrzeugen, sind in der Regel als Reibungsbremsen ausgebildet. Eine solche als Reibungsbremse gestaltete Scheibenbremse ist auch der EP 1 016 804 A1 zu entnehmen, siehe Oberbegriff des Anspruchs 1, und umfasst einen Bremssattel mit Bremsbelägen, die beiderseits einer zugehörigen Bremsscheibe angeordnet sind, um mit dieser zusammenzuwirken. Zur Bremsbetätigung ist im Bremssattel zumindest eine Betätigungsvorrichtung vorgesehen. Eine derartige Betätigungsvorrichtung ist häufig mit einer hydraulischen Druckquelle verbunden und weist einen in einem Bremszylinder verschiebbar gelagerten Bremskolben auf. Bei solchen Scheibenbremsen werden die Bremsbeläge durch die Bremskolben der Betätigungsvorrichtungen axial gegen die rotierende Bremsscheibe gedrückt. Durch die Reibung zwischen der rotierenden Bremsscheibe und den rotatorisch festgehaltenen Bremsbelägen wird Rotationsenergie in Wärme umgewandelt. Dadurch kommt es zu einem Temperaturanstieg in der Bremsscheibe, den Bremsbelägen und den nachgeschalteten Komponenten der Reibungsbremse wie Schutzkappe, Bremskolben, Bremssattel und Bremsflüssigkeit (Hydraulikflüssigkeit). Durch den Temperaturanstieg kann es zu unerwünschten Fehlfunktionen der Reibungsbremse kommen. Dies kann sich beispielsweise in einem Nachlassen der Bremsleistung (Fading) und in besonders kritischen Fällen auch in einem Überhitzen der Bremsflüssigkeit (Dampfblasenbildung) oder einer Zerstörung der zugehörigen Dichtungen bzw. Schutzkappen äußern. Ein sicherer Betrieb der Bremsanlage ist unter diesen Umständen nicht mehr möglich. Das Problem der Überhitzung stellt sich vor allem bei Hochleistungsbremsanlagen, die bei hochmotorisierten Straßenfahrzeugen oder bei Motorsportfahrzeugen zum Einsatz kommen. Insbesondere bei Hochleistungsbremsanlagen für Rennfahrzeuge werden beispielsweise durch Verwendung von Carbon-Bremsscheiben und Carbon-Bremsbelägen große Energiemengen in Wärme umgewandelt, was zu einem sehr starken Temperaturanstieg in der Bremsscheibe, den Bremsbelägen und den nachgeschalteten Komponenten der Reibungsbremse wie Bremskolben, Bremssattel und Bremsflüssigkeit führt. In der bereits genannten EP 1 016 804 A1 wird demzufolge der Bremssattel mit Luftleitelementen versehen, um einen Kühlluftstrom zu den Bremsbelägen und den Bremskolben einzustellen. Dies erfordert ein zusätzliches Luftleitelement, das die ebenfalls thermisch stark belastete Bremsscheibe axial überragt. Darüber hinaus können mit den bekannten Luftleitelementen nicht alle thermisch beanspruchten Bereiche des Bremssattels erreicht werden.

Weiterhin beschreibt die DE 100 34 364 A1 einen Bremssattel mit hydraulischer Betätigungsvorrichtung, bei der der Bremskolben zur Kühlung mit einem Kühlmedium durchströmt werden kann. Dazu ist der Bremskolben mit einem innenliegenden Hohlraum ausgestattet, durch den das Kühlmedium über Eintritts- und Austrittsöffnung hindurchgeleitet wird. Dies erfordert eine spezielle Gestaltung des Bremskolbens sowie eine zusätzliche Öffnung des Bremszylinders, um die Zufuhr des Kühlmediums sicher zu stellen. Diese zusätzliche Zylinderöffnung ist ebenso gegenüber der Umgebung abzudichten. Damit bedingt die Vorrichtung zur Bremsenkühlung eine recht aufwändige Konstruktion des Bremssattels.

Die Aufgabe der Erfindung besteht also darin, eine sinnvolle sowie kostengünstig umsetzbare Vorrichtung zur Vermeidung einer Überhitzung bei Kraftfahrzeug-Scheibenbremsen, insbesondere mit hydraulischer Betätigungsvorrichtung, anzugeben.

Diese Aufgabe wird gelöst durch die erfindungsgemäße Realisierung einer gezielten Strömungsführung eines Kühlmediums, insbesondere Luft, durch den Innenraum des Bremssattels der Scheibenbremse,siehe Anspruch 1. Ziel der Erfindung ist es dabei mit möglichst einfachen Mitteln die gezielte Führung eines Kühlmediums zu realisieren und vor allem die Temperatur des Bremsbelags, der Betätigungsvorrichtung und des Bremssattels zu reduzieren. Dazu umfasst die Scheibenbremse für ein Kraftfahrzeug einen Bremssattel, der eine zugehörige Bremsscheibe sowie beiderseits der Bremsscheibe angeordnete Bremsbeläge übergreift und der zumindest zwei Betätigungsvorrichtungen aufweist. Im Bremssattel verläuft vorzugsweise innenliegend zumindest ein Kühlkanal zur Durchströmung mit einem Kühlmedium, der eine Einlass- und eine Auslassöffnung aufweist. Dabei verläuft der Kühlkanal im Innern des Bremssattels unmittelbar entlang der Betätigungsvorrichtungen, um diese im laufenden Betrieb zu kühlen. Zur Erreichung eines starken Kühleffekts wird der Kühlkanal mit einer möglichst großen Berührfläche an der Betätigungsvorrichtungen vorbei geführt. Dazu wird der Kühlkanal innerhalb des Bremssattels insbesondere umgelenkt, beispielsweise ausgehend von einer radialen in eine axiale Ausrichtung. Dies erweist sich vor allem bei hydraulischen Betätigungsvorrichtungen als sinnvoll, um eine unerwünschte Überhitzung der Bremsflüssigkeit zu verhindern. Als Kühlmedium bietet sich grundsätzlich Luft an, jedoch ist auch der Einsatz eines anderen Kühlmediums denkbar.

Dadurch, dass der Kühlkanal eine auf einen Bremsbelag gerichtete Auslassöffnung aufweist, wird neben der Betätigungsvorrichtung auch die thermisch stark belastete Reibpaarung gekühlt.

Eine vorteilhafte Weiterbildung der Scheibenbremse sieht vor, die Einlassöffnung des Kühlkanals in einem thermisch weniger und wenigstens eine Auslassöffnung in einem thermisch stärker belasteten Bereich des Bremssattels anzuordnen. Damit wirkt die Strömung des Kühlmediums durch den Kühlkanal wie eine Gegenstromkühlung und gestattet es bei geschicktem Verlauf des Kühlkanals alle thermisch kritischen Bereiche des Bremssattels zu erreichen.

Gemäß einer Variante der Scheibenbremse verläuft der Kühlkanal innenliegend im Bremssattel, so dass der Kühlkanal bereits bei der Herstellung des Bremssattels angeformt wird. Der Kühlkanal erfordert damit keine zusätzlichen Bauteile. Alternativ dazu kann der Kühlkanal z.T. auch als offener Kanal an der Außenseite des Bremssattels angeformt sein. Eine Verbesserung der Strömung im Kühlkanal erreicht man dadurch, dass der offene Kühlkanal mit einem Abdeckelement verschlossen ist.

Je nach Ausführung der Scheibenbremse kann es sinnvoll sein, dass der Kühlkanal sich nur auf einer Bremsscheibenseite erstreckt. Dies trifft beispielsweise auf Schwimmsattel-Scheibenbremsen zu, bei denen auf nur einer Bremsscheibenseite eine Betätigungsvorrichtung angeordnet ist. Grundsätzlich ist die erfindungsgemäße Gestaltung des Kühlkanals jedoch unabhängig von der Scheibenbremsenausführung anwendbar. Insbesondere kann die gezielte Kühlmediumströmung sowohl bei Fest- als auch bei Schwimmsattelbremsen zum Einsatz kommen.

Eine weitere Variante der Scheibenbremse ergibt sich dadurch, dass zumindest ein Leitelement zur gezielten Zufuhr des Kühlmediums zur Scheibenbremse vorgesehen ist. Derartige Leitelemente sind vor allem bei einer Kühlluftströmung empfehlenswert, sofern die Scheibenbremse während der Fahrt von selbst nicht ausreichend vom Fahrtwind umströmt wird. Solche Leitelemente sind beispielsweise als Trichter oder sonstige geeignete Strömungsprofile gestaltet. Bei Verwendung in Verbindung mit Schwimmsattel-Scheibenbremsen ist darauf zu achten, dass die Leitelemente infolge der verschiebbaren Bremssattelanordnung zum Längenausgleich flexibel ausgebildet sind. Gemäß einer vorteilhaften Weiterentwicklung leitet das Leitelement einen Teil des Kühlmediumstroms unmittelbar zum Bremsbelag. Dies verstärkt die Kühlwirkung am thermisch stark beanspruchten Bremsbelag.

Weitere Detailmerkmale der Erfindung werden im folgenden in Verbindung mit den in den Figuren dargestellten Ausführungsbeispielen näher erläutert.

Darin zeigt/zeigen:
- Fig. 1: eine erste Ausführung eines Hochleistungsschwimmsattel mit einem Kühlkanal in räumlicher Schnittansicht;
- Fig. 2: eine zweite Ausführung eines Hochleistungsschwimmsattel mit einem Kühlkanal in räumlicher Schnittansicht;
- Fig. 3: eine weiter Schnittansicht des Hochleistungsschwimmsattels nach den Figuren 1 oder 2;
- Fig. 4-6: drei Ansichten einer weiteren Ausführungsform eines Hochleistungsbremssattels mit Kühlkanal und zusätzlichem Leitelement.

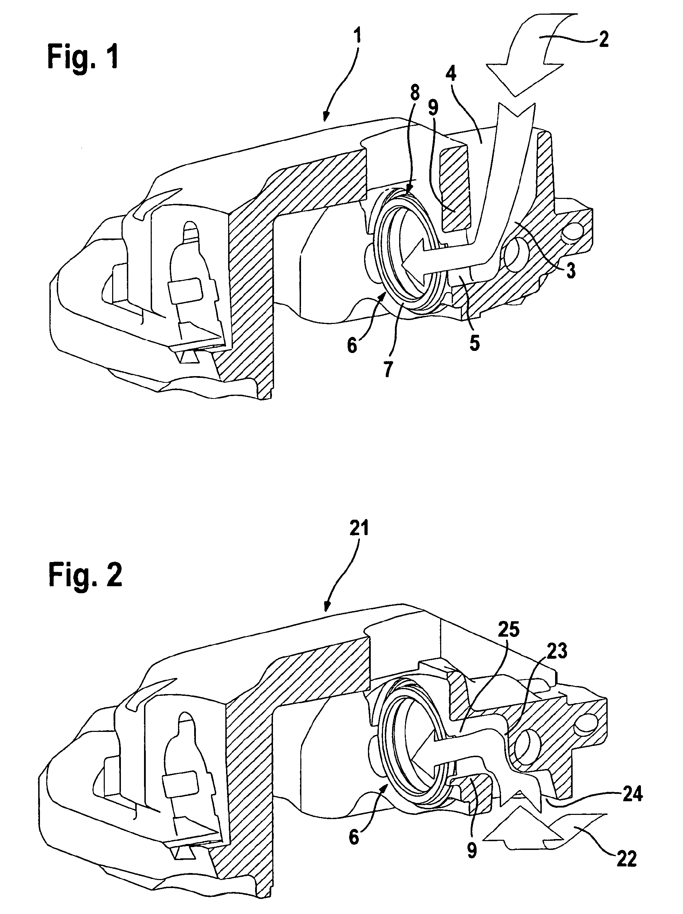

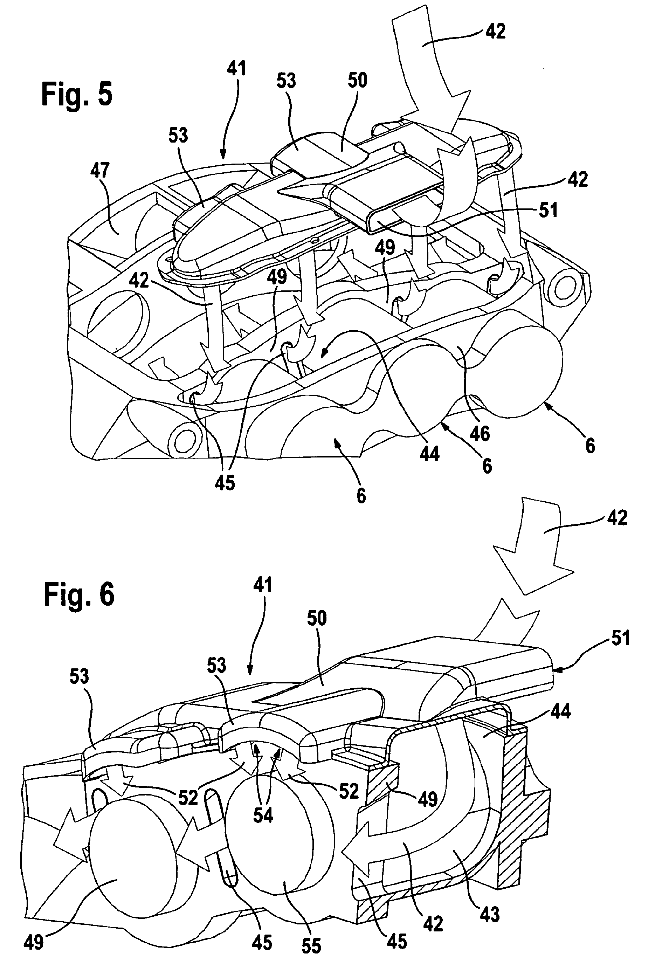

Wie aus den Ausführungsformen nach den Figuren 1-6 ersichtlich, besteht die erfindungsgemäße Lösung im wesentlichen in einer aerodynamisch optimierten Gestaltung der Geometrie des Bremssattels 1, 21, 41. Durch diese Gestaltung wird der auf den Bremssattel 1, 21, 41 gelenkte Kühlmediumstrom 2, 22, 42 im Innern des Bremssattels 1, 21, 41 gezielt durch diejenigen Bereiche des Bremssattels 1, 21, 41 geleitet, die thermisch stark beansprucht werden. Grundsätzlich werden als Reibungsbremsen ausgebildete Scheibenbremsen bei Kraftfahrzeugen durch die in Reibungswärme umgewandelte Bremsleistung stark belastet. Diese Reibungswärme beansprucht vor allem die wenig hitzebeständigen Komponenten der Scheibenbremse, wie zum Beispiel Dichtungen, sowie die unter sehr hohen Temperaturen funktionsmäßig nachlassenden Bremsenbauteile, wie etwa Bremsbeläge. Zur Verbesserung der Bremsenkühlung wird der Bremssattel 1, 21, 41 insbesondere an den thermisch stark belasteten Bereichen vor allem im Innenraum gezielt von einem Kühlmedium durchströmt. Als Kühlmedium wird vorzugsweise Luft verwendet, wobei die Kühlluft zunächst zum Einbauort des Bremssattels 1, 21, 41 zu leiten ist, zumindest sofern der Bremssattel 1, 21, 41 nicht von selbst ausreichend vom Fahrtwind umströmt wird. Allerdings sind auch andere Kühlmedien denkbar, wobei im einzelnen ggf. ein abgeschlossener Kühlkreislauf zu gestalten ist. Der dem Bremssattel 1, 21, 41 zugeführte Kühlluftstrom 2, 22, 42 wird jeweils über zumindest einen Kühlkanal 3, 23, 43 durch den Bremssattel 1, 21, 41 geführt. Dazu besitzt der Kühlkanal 3, 23, 43 zumindest eine Einlassöffnung 4, 24, 44 sowie wenigstens eine Auslassöffnung 5, 25, 45.

Figur 1 zeigt in einer ersten Variante einen rahmenförmigen Schwimmsattel 1 eines Kraftfahrzeugs, der verschiebbar an einem nicht dargestellten fahrzeugfesten Bauteil gelagert ist. Der Schwimmsattel 1 übergreift in üblicher Weise eine nicht gezeigte Bremsscheibe sowie beiderseits der Bremsscheibe angeordnete Bremsbeläge. Dabei bilden die Bremsscheibe und die Bremsbeläge die Reibpaarung, über die bei Bremsbetätigung die Bremsleistung in Reibungswärme umgesetzt wird. Zur Bremsbetätigung weist der Schwimmsattel 1 auf einer Bremsscheibenseite zwei hydraulische Betätigungsvorrichtungen 6 auf, von denen nur eine in Figur zu sehen ist und mittels der die Bremsbeläge in Reibeingriff mit der Bremsscheibe gebracht werden können. Die hydraulische Betätigungsvorrichtung 6 umfasst jeweils im wesentlichen einen Bremskolben 7 und eine zugehörige Zylinderbohrung 8 des Schwimmsattels 1, in der der Bremskolben 7 verschiebbar gelagert ist. Zum Druckaufbau ist die Betätigungsvorrichtung 6 mit einer hydraulischen Druckquelle verbunden. Um eine verbesserte Abfuhr der im Betrieb entstehenden Reibungswärme zu erreichen, besitzt der Schwimmsattel 1 einen innenliegenden Kühlkanal 3, der bezogen auf die Bremsscheibenachse radial außenliegend eine Einlassöffnung 4 aufweist. Der Kühlkanal 3 dient der gezielten Durchströmung mit einem Kühlluftstrom 2, der dem Schwimmsattel 1 aus dem Fahrtwind zugeführt wird. Innerhalb des Schwimmsattels 1 verläuft der geschlossene Kühlkanal 3 unmittelbar entlang der Betätigungsvorrichtungen 6, um diese vor Überhitzung zu schützen. In diesem Zusammenhang ist vor allem eine Überhitzung der Bremsflüssigkeit zu vermeiden, da diese zur Dampfblasenbildung innerhalb der Bremsflüssigkeit führen kann und somit die Bremsfunktion unmittelbar beeinträchtigt. Demzufolge führt der Kühlkanal 3 sehr großflächig an den Betätigungsvorrichtungen 6 vorbei, um an diesen eine maximale Kühlwirkung zu erreichen. Die Leitung des Kühlluftstroms 2 im Innern des Schwimmsattels 1 wird hierbei durch gekrümmte Flächen und geeignete schlitzförmige Auslassöffnungen 3 zwischen den Betätigungsvorrichtungen 6 oder um die Betätigungsvorrichtungen 6 herum bewirkt. Dabei wird der Kühlluftstrom 2 bzw. der Kühlkanal 3 innerhalb des Schwimmsattels 1 von einer radialen in eine axiale Ausrichtung umgelenkt. Dies verstärkt die Kühlwirkung auf die Betätigungsvorrichtung 6. Innerhalb des Schwimmsattels 1 kann sich der Kühlkanal 3 auch verzweigen, um eine möglichst vollständige Umströmung der Betätigungsvorrichtungen 6 zu erreichen. Im Sinne einer optimierten Kühlluftströmung 2 hat der Kühlkanal 3 einen geschlossenen Querschnitt. Der Kanalquerschnitt kann aber auch alternativ durch nachträglich montierte Abdeckungen geschlossen werden. In Strömungsrichtung des Kühlluftstroms 2 betrachtet wird der Kühlkanal 4 durch eine Wand 9 des Schwimmsattels 1 axial begrenzt, die dem axial innenliegenden Bremsbelag zugewandt ist. Diese begrenzende Wand 9 ist mit zumindest einer schlitzförmigen Öffnung 5 versehen, die die Auslassöffnung 5 des Kühlkanals 3 bildet. Über die Auslassöffnung 5 tritt der Kühlluftstrom 2 aus dem Schwimmsattel aus und wird gezielt auf den axial innenliegenden Bremsbelag bzw. die Bremsscheibe gerichtet. Die Temperatur des Bremsbelags und der Reibbelagmasse wird dadurch wirkungsvoll gesenkt und die zu den Betätigungsvorrichtungen gehörigen Kunststoffteile, wie etwa Schutzkappen und Dichtungen, werden geschont.

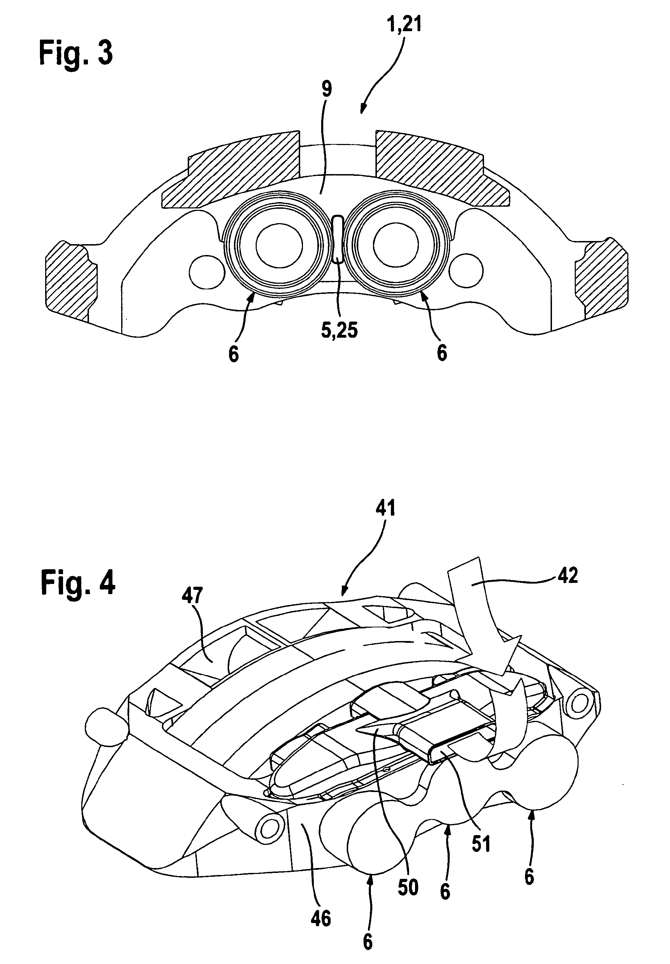

Je nach Einbaulage des Bremssattels 1, 21 kann sich auch eine Ausführung des Schwimmsattels nach Figur 2 bzw. 3 als sinnvoll erweisen. Für den Schwimmsattel 21 nach Figur 2 erfolgt die Zufuhr des Kühlluftstroms 22 radial von innen, so dass die Einlassöffnung 24 des Kühlkanals 23 radial nach innen geöffnet ist. Der Verlauf des Kühlkanals 23 innerhalb des Schwimmsattels 21 ist analog zur Ausführung nach Figur 1 ausgebildet, wobei die Betätigungsvorrichtungen 6 ebenso großflächig mit Kühlluft umströmt werden. Die schlitzförmige Auslassöffnung 25 befindet sich ebenfalls in einer Wand 9 des Schwimmsattels 21 und bewirkt eine auf den Bremsbelag gerichtete Kühlluftströmung.

Für die beiden beschriebenen Schwimmsattelvarianten 1, 21 nach den Figuren 1-3 ergibt sich damit im wesentlichen eine radiale Einströmung der Kühlluft in den Bremssattel 1, 21 und nach der Umlenkung im Bremssattels 1, 21 axiale Durchströmung des Schwimmsattels 1, 21. Dabei tritt der Kühlluftstrom 2, 22 axial aus dem Schwimmsattel 1, 21 aus. Allgemein wirkt die Kühlluftströmung wie eine Gegenstromkühlung, wobei der Kühlluftstrom ausgehend von den thermisch weniger belasteten Bereichen zu den thermisch stark belasteten Sattelbereichen gelenkt wird. Die beschriebene Gestaltung der Kühlluftströmung ist selbstverständlich nicht nur auf bestimmte Bremssattelausführungen beschränkt. Vielmehr lässt sie sich sowohl bei Fest- und Schwimmsätteln als auch bei Bremssätteln mit einer einzigen bzw. mehreren Betätigungsvorrichtungen 6 anwenden. Dabei ist grundsätzlich die jeweilige Ausführung der Betätigungsvorrichtung 6 irrelevant. Die beschriebene Art der Kühlluftströmung ist demnach nicht nur auf Bremssättel mit hydraulischer Betätigungsvorrichtung 6 beschränkt. Weiterhin beeinflusst die Einbaulage des Bremssattels 1, 21 die jeweilige Zufuhr des Kühlluftstroms 2, 22. Dies gilt insbesondere für den Fall, dass der Bremssattel 1, 21 von selbst nicht ausreichend vom normalen Fahrtwind umströmt wird. In einem solchen Fall sind zusätzlich Elemente zur Strömungslenkung sinnvoll, die den Kühlluftstrom gezielt dem Bremssattel zuführen. Derartige Elemente zur Strömungslenkung, z. B. Trichter oder sonstige Leitelemente, sind entweder fahrzeug- oder bremssattelfest montiert und bewirken die gezielte Kühlluftströmung. Die erwähnten Elemente zur Leitung des Kühlluftstromes müssen vor allem bei Schwimmsätteln Vorrichtungen zum Längenausgleich beinhalten, da der Schwimmsattel im Bremsenbetrieb eine Relativbewegung zum Fahrzeugchassis und den üblicherweise dort befestigten Leitelementen ausführt.

Die Figuren 4-6 zeigen eine demgegenüber weiterentwickelte Hochleistungsbremse, die unter anderem auch für den Einsatz im Automobilrennsport geeignet ist. Dabei ist der Hochleistungsschwimmsattel 41 zur Gewichtseinsparung in Leichtbauweise gestaltet, wobei die zu beiden Bremsscheibenseiten sich erstreckenden Sattelschenkel 46, 47 fachwerkartig aufgebaut und über Brückenabschnitte 48 miteinander verbunden sind. Im axial innenliegenden Sattelschenkel 46 sind zur Bremsbetätigung mehrere hydraulische Betätigungsvorrichtungen 6 angeordnet. Die aerodynamisch optimierte Geometrie des Hochleistungsschwimmsattels 41 sieht vor, dass zur verbesserten Kühlluftdurchströmung die Betätigungsvorrichtungen 6 innerhalb des Sattelschenkels 46 mit einem möglichst großen Oberflächenanteil in einem Kühlluftkanal 43 bzw. mehreren Kühlluftkanälen 43 angeordnet sind. Vergleichbar den bisher erläuterten Bremssattelausführungen wird der Kühlluftstrom 42 über den Verlauf des Kühlkanals 43 im Sinne einer Gegenstromkühlung von den thermisch weniger belasteten Schwimmsattelbereichen zu den thermisch stark beanspruchten Schwimmsattelbereichen geleitet. Dabei bietet es sich an, den Kühlkanal 43 im Sattelschenkel 46 zu verzweigen, um mit dem Kühlluftstrom 42 alle Betätigungsvorrichtungen 6 gleichermaßen großflächig zu umströmen. In Strömungsrichtung der Kühlluft betrachtet werden die einzelnen Arme des Kühlkanals 43 durch eine Wand 49 des Sattelschenkels 46 axial begrenzt. Innerhalb der begrenzenden Wand 49 sind mehrere schlitzförmige Öffnungen 45 ausgebildet, die die Auslassöffnungen 45 des Kühlkanals 43 bilden und durch welche der Kühlluftstrom 42 gezielt auf den axial innenliegenden Bremsbelag gelenkt wird.

Die großflächige Einlassöffnung 44 des Kühlkanals 43 ist radial außenliegend am Sattelschenkel 46 angeordnet und erschwert für sich allein genommen eine gezielte Kühlluftströmung 42. Zur verbesserten Kühlluftzufuhr zum Hochleistungsschwimmsattel 41 ist demzufolge ein Leitelement 50 zur bewussten Lenkung der Kühlluftströmung 42 vorgesehen. Das Leitelement 50 ist trichterartig aufgebaut und am axial innenliegenden Sattelschenkel 46 befestigt. Dabei bedeckt das Leitelement 50 die gesamte Einlassöffnung 44 des Sattelschenkels 46, wodurch der Kühlkanal 43 insgesamt geschlossen wird. Dies führt zu einer Verstärkung der Kühlluftströmung und damit zu einer Erhöhung der Kühlwirkung. In vorteilhafter Weise wird die Abdeckungen des Kühlkanals 43 durch Leitelemente 50 gebildet, die den Kühlluftstrom 42 aus einem Bereich außerhalb des Einbauraumes des Hochleistungsschwimmsattels 41 (z. B. der Radfelge) gezielt an den üblicherweise aufgrund der speziellen Felgengröße und Bauart nicht dem direkten Fahrtwind ausgesetzten Bremssattel führen. Das in den Figuren 4-6 gezeigte Leitelement 50 nimmt über eine Einlassöffnung 51 den dem Hochleistungssattel 41 zugeleiteten Luftstrom 42 auf und verteilt diesen zunächst auf die einzelnen Betätigungsvorrichtungen 6 im Inneren des Sattelschenkel 46. Damit bewirkt das Leitelement 50 neben der Abdeckung der großen Einlassöffnung 44 am Sattelschenkel 46 auch die gezielte Strömungslenkung. Ferner zweigt das Leitelement 50 einen Teil des Kühlluftstromes 42 ab, um diesen Strömungsanteil 52 über mehrere Lüftungsarme 53 direkt dem axial innenliegenden Bremsbelag bzw. den Bremskolben 55 zuzuleiten. Dazu besitzt jeder Lüftungsarm 53 entsprechende Auslassöffnungen 54, um eine gezielte Anströmung des Bremsbelags bzw. der Bremskolben 55 mit Kühlluft zu gewährleisten. Damit wird der Kühleffekt am thermisch stark beanspruchten Bremsbelag sowie den Bremskolben 55 deutlich verstärkt. Dabei kann es sinnvoll sein die Lüftungsarme 53 zur Lenkung des abgezweigten Strömungsanteils 52 über die Bremsscheibe zu führen um die Bremsbeläge auf beiden Bremsscheibenseiten mit Kühlluft zu umströmen.

## Patentansprüche

1. Scheibenbremse für ein Kraftfahrzeug mit einem Bremssattel (1, 21, 41), der eine zugehörige Bremsscheibe sowie beiderseits der Bremsscheibe angeordnete Bremsbeläge übergreift und der zumindest zwei Betätigungsvorrichtungen (6) aufweist, mit zumindest einem im Bremssattel (1, 21, 41) verlaufenden Kühlkanal (3, 23, 43) zur Durchströmung mit einem Kühlmedium, der eine Einlass- (4, 24, 44) und eine Auslassöffnung (5, 35, 45) aufweist, wobei der Kühlkanal (3, 23, 43) unmittelbar entlang der Betätigungsvorrichtungen (6) verläuft und eine auf einen Bremsbelag gerichtete Auslassöffnung (5, 25, 45, 54) aufweist **dadurch gekennzeichnet, dass** der Kühlkanal (3, 23, 43) zumindest abschnittsweise zwischen zwei Betätigungsvorrichtungen (6) angeordnet ist.

2. Scheibenbremse nach Anspruch 1, **dadurch gekennzeichnet, dass** die Einlassöffnung (4, 24, 44) des Kühlkanals (3, 23, 43) in einem thermisch weniger und wenigstens eine Auslassöffnung (5, 25, 45) in einem thermisch stärker belasteten Bereich des Bremssattels (1, 21, 41) angeordnet ist.

3. Scheibenbremse nach einem der vorhergehenden Ansprüche, **dadurch gekennzeichnet, dass** die Auslassöffnung (5, 25, 45, 54) zwischen den Betätigungsvorrichtungen (6) angeordnet ist (S.7, Z. 30).

4. Scheibenbremse nach einem der vorhergehenden Ansprüche, **dadurch gekennzeichnet, dass** der Kühlkanal (3, 23, 43) innenliegend im Bremssattel (1, 21, 41) verläuft.

5. Scheibenbremse nach einem der vorhergehenden Ansprüche, **dadurch gekennzeichnet, dass** der Kühlkanal (43) als z.T. offener Kanal an der Außenseite des Bremssattels (1, 21, 41) angeformt ist.

6. Scheibenbremse nach Anspruch 5, **dadurch gekennzeichnet, dass** der offene Kühlkanal (43) mit einem Abdeckelement (50) verschlossen ist.

7. Scheibenbremse nach einem der vorhergehenden Ansprüche, **dadurch gekennzeichnet, dass** der Kühlkanal (3, 23, 43) sich nur auf einer Bremsscheibenseite erstreckt.

8. Scheibenbremse nach einem der vorhergehenden Ansprüche, **dadurch gekennzeichnet, dass** zumindest ein Leitelement (50) zur gezielten Zufuhr des Kühlmediums zur Scheibenbremse vorgesehen ist.

9. Scheibenbremse nach Anspruch 8, **dadurch gekennzeichnet, dass** das Leitelement (50) einen Teil des Kühlmediumstroms (52) unmittelbar zum Bremsbelag leitet.

## Claims

1. Disc brake for a motor vehicle, having a brake caliper (1, 21, 41) which engages over an associated brake disc and over brake linings arranged at both sides of the brake disc and which has at least two actuating devices (6), having at least one cooling duct (3, 23, 42), which runs in the brake caliper (1, 21, 41), for a throughflow of cooling medium, which cooling duct (3, 23, 43) has an inlet opening (4, 24, 44) and an outlet opening (5, 35, 45), with the cooling duct (3, 23, 43) running directly along the actuating devices (6) and having an outlet opening (5, 25, 45, 54) which is directed towards a brake lining, **characterized in that** the cooling duct (3, 23, 43) is arranged at least in sections between two actuating devices (6).

2. Disc brake according to Claim 1, **characterized in that** the inlet opening (4, 24, 44) of the cooling duct (3, 23, 43) is arranged in a thermally relatively lightly-loaded region, and at least one outlet opening (5, 25, 45) is arranged in a thermally relatively highly-loaded region, of the brake caliper (1, 21, 41).

3. Disc brake according to one of the preceding claims, **characterized in that** the outlet opening (5, 25, 45, 54) is arranged between the actuating devices (6) (page 7, line 30).

4. Disc brake according to one of the preceding claims, **characterized in that** the cooling duct (3, 23, 43) runs at the inside in the brake caliper (1, 21, 41).

5. Disc brake according to one of the preceding claims, **characterized in that** the cooling duct (43) is integrally formed as a partially open duct on the outer side of the brake caliper (1, 21, 41).

6. Disc brake according to Claim 5, **characterized in that** the open cooling duct (43) is closed off by means of a covering element (50).

7. Disc brake according to one of the preceding claims, **characterized in that** the cooling duct (3, 23, 43) extends only on one side of the brake disc.

8. Disc brake according to one of the preceding claims, **characterized in that** at least one guide element (50) for the targeted supply of the cooling medium to the disc brake is provided.

9. Disc brake according to Claim 8, **characterized in that** the guide element (50) conducts a part of the cooling medium flow (52) directly to the brake lining.

## Revendications

1. Frein à disque pour un véhicule automobile, comprenant un étrier (1, 21, 41), qui vient en prise par le dessus avec un disque de frein associé, et avec des garnitures de frein disposées de part et d'autre du disque de frein, et qui présente au moins deux dispositifs d'actionnement (6), avec au moins un canal de refroidissement (3, 23, 43) s'étendant dans l'étrier (1, 21, 41), pour le passage d'un fluide de refroidissement, qui présente une ouverture d'entrée (4, 24, 44) et une ouverture de sortie (5, 35, 45), le canal de refroidissement (3, 23, 43) s'étendant directement le long des dispositifs d'actionnement (6), et présentant une ouverture de sortie (5, 25, 45, 54) orientée vers une garniture de frein, **caractérisé en ce que** le canal de refroidissement (3, 23, 43) est disposé au moins en partie entre deux dispositifs d'actionnement (6).

2. Frein à disque selon la revendication 1, **caractérisé en ce que** l'ouverture d'entrée (4, 24, 44) du canal de refroidissement (3, 23, 43) est disposée dans une région de l'étrier (1, 21, 41) moins sollicitée thermiquement et au moins une ouverture de sortie (5, 25, 45) est disposée dans une région plus fortement sollicitée thermiquement.

3. Frein à disque selon l'une quelconque des revendications précédentes, **caractérisé en ce que** l'ouverture de sortie (5, 25, 45, 54) est disposée entre les dispositifs d'actionnement (6).

4. Frein à disque selon l'une quelconque des revendications précédentes, **caractérisé en ce que** le canal de refroidissement (3, 23, 43) s'étend à l'intérieur dans l'étrier (1, 21, 41).

5. Frein à disque selon l'une quelconque des revendications précédentes, **caractérisé en ce que** le canal de refroidissement (43) est formé en tant que canal partiellement ouvert au niveau du côté extérieur de l'étrier (1, 21, 41).

6. Frein à disque selon la revendication 5, **caractérisé en ce que** le canal de refroidissement ouvert (43) est fermé par un élément de recouvrement (50).

7. Frein à disque selon l'une quelconque des revendications précédentes, **caractérisé en ce que** le canal de refroidissement (3, 23, 43) s'étend uniquement sur un côté du disque de frein.

8. Frein à disque selon l'une quelconque des revendications précédentes, **caractérisé en ce qu'**au moins un élément conducteur (50) est prévu pour l'alimentation ciblée du fluide de refroidissement au frein à disque.

9. Frein à disque selon la revendication 8, **caractérisé en ce que** l'élément conducteur (50) guide une partie du flux de fluide de refroidissement (52) directement vers la garniture de frein.
